# EUROPÄISCHE PATENTSCHRIFT

(11) **EP 1 991 385 B1**
(45) Veröffentlichungstag und Bekanntmachung des Hinweises auf die Patenterteilung: **13.06.2012**
(21) Anmeldenummer: 06829766.2
(22) Anmeldetag: 20.12.2006
(51) Int. Cl.: B23K 26/08, B23K 26/06, B23K 26/10, B23K 26/14, B41M 5/24, B41J 2/44, B41M 5/26, H01S 3/067, H01S 3/094

(54) **VORRICHTUNG ZUR BESCHRIFTUNG VON KENNZEICHNUNGSSCHILDERN**
DEVICE FOR INSCRIBING IDENTIFICATION PLATES
DISPOSITIF DESTINÉ À PORTER DES INSCRIPTIONS SUR DES PANNEAUX D'INFORMATION

(30) Priorität: 18.01.2006 DE 102006002573
(43) Veröffentlichungstag der Anmeldung: 19.11.2008
(73) Patentinhaber: Murrplastik Systemtechnik GmbH, 71570 Oppenweiler (DE)
(72) Erfinder: GANGL, Thomas, 74535 Mainhardt (DE); RUDERT, Michael, 71334 Waiblingen (DE)
(74) Vertreter: Reule, Hanspeter
(86) Internationale Anmeldenummer: PCT/EP2006/012285
(87) Internationale Veröffentlichungsnummer: WO 2007/082583

(56) Entgegenhaltungen:
- EP-A- 1 057 578
- EP-A- 1 120 684
- EP-A1- 0 716 448
- JP-A- 2002 160 078
- JP-A- 2003 236 685
- US-A- 6 160 568
- US-A1- 2002 047 890
- MOLVA E: "Microchip lasers and their applications in optical microsystems" OPTICAL MATERIALS, ELSEVIER SCIENCE PUBLISHERS B.V. AMSTERDAM, NL, Bd. 11, Nr. 2-3, Januar 1999 (1999-01), Seiten 289-299, XP004364765 ISSN: 0925-3467

## Beschreibung

Die Erfindung betrifft eine Vorrichtung zur Beschriftung von Kennzeichnungsschildern gemäß Oberbegriff des Anspruchs 1.

Bekannte Vorrichtungen dieser Art, mit denen Kennzeichnungsschilder, beispielsweise zur Kennzeichnung von elektrischen Bauelementen, beschriftet werden können, weisen ein Laserbeschriftungsgerät bzw. einen Laserdrucker auf, dessen Resonator und Pumplichtquelle ortsfest angebracht sind. Der aus dem Resonator austretende Laserstrahl wird über eine Spiegeloptik auf die zu beschriftenden Kennzeichnungsschilder gelenkt, wobei die Spiegeloptik an der Bewegungseinheit angebracht ist und zur Strahlumlenkung in Abhängigkeit von der Bewegung des Beschriftungskopfs bewegt wird. Der Strahl weitet sich bis zu seinem Auftreffen auf den Kennzeichnungsschildern auf, wobei die Strahlaufweitung abhängig von der vom Licht zurückgelegten Wegstrecke ist und nur unzureichend durch eine Fokussieroptik kompensiert werden kann. Dadurch entsteht ein Brennfleck auf dem zu beschriftenden Kennzeichnungsschild, der eine geringere Leistungsdichte aufweist, als bei präziser Fokussierung möglich wäre. Die Laserleistung muß daher relativ hoch bemessen werden. Des weiteren summieren sich Ungenauigkeiten in der Mechanik der Spiegeloptik auf, die aufgrund von Fertigungstoleranzen unvermeidbar sind, wodurch die Genauigkeit beim Beschriftungsvorgang beeinträchtigt wird.

Eine Beschriftungsvorrichtung mit den Merkmalen des Oberbegriffs des Anspruchs 1 ist beispielsweise aus der EP 1 057 578 A2 bekannt. Aus der US 6 160 568 A ist eine Beschriftungsvorrichtung bekannt, bei der ein Faserlaser zum Einsatz kommt. Schließlich beschreibt die Veröffentlichung "Microchip lasers and their applications in optical microsystems" von Engin Molva in Optical Materials 11 (1999), 289 - 299, einen Microchip-Laser mit einem Resonator sowie einer vom Resonator räumlich getrennten, mit dem Resonator über einen Lichtleiter verbundenen, ortsfest angeordneten Pumplichtquelle.

Es ist Aufgabe der Erfindung, eine Vorrichtung der eingangs genannten Art derart weiterzubilden, dass der Beschriftungsvorgang mit größerer Genauigkeit und ausreichender Betriebssicherheit durchgeführt werden kann.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Austrittsstelle des Laserlichts vom lichtleitenden Medium an die Umgebung nahe an den zu beschriftenden Kennzeichnungsschildern anzubringen. Bei Verwendung eines Faserlasers kann das Laserlicht mit nur geringen Verlusten in eine Lichtleitfaser eingekoppelt werden. Durch eine Anbringung der Lichtleitfaser mit ihrem lichtaustrittsseitigen Ende am Beschriftungskopf kann der Laserstrahl gebündelt bis dicht an die zu beschriftenden Kennzeichnungsschilder herangeführt werden. Zur Reduzierung der Leistungsverluste bei der Einkopplung des Laserlichts in die Lichtleitfaser ist diese zweckmäßig mit ihrem ersten Ende an den Resonator angespleißt. Des weiteren wird die aufwendige und teuere Spiegeloptik überflüssig. Der Beschriftungskopf weist eine den/ aus der Lichtleitfaser austretenden Laserstrahl rings umschließende Schutzhaube auf. Die Schutzhaube verhindert, dass von den Kennzeichnungsschildern oder der Auflageebene reflektiertes Laserlicht in die Umgebung gelangt und beispielsweise im Auge einer Bedienperson Schaden anrichtet.

Vorteilhaft weist der Beschriftungskopf mindestens eine Kollimationslinse und mindestens eine Fokussierlinse zur Fokussierung des aus dem zweiten Ende der Lichtleitfaser austretenden Laserlichts auf die Kennzeichnungsschilder auf. Die Schutzhaube weist vorteilhaft einen Schlitten zum Aufsetzen auf die zu beschriftenden Kennzeichnungsschilder auf. Dabei erstrecken sich den Laserstrahl rings umschließende Seitenwände zweckmäßig von der Höhe der Austrittsstelle des Laserlichts bis hinab zum Schlitten. Die Schutzhaube umschließt dann den Laserstrahl vollständig und kann gut über die zu beschriftenden Kennzeichnungsschilder auf ihnen aufliegend bewegt werden. Vorteilhaft ist die Schutzhaube gegenüber der Bewegungseinheit höhenverstellbar gelagert. Dabei wird sie zweckmäßig durch ein Rückstellelement auf die zu beschriftenden Kennzeichnungsschilder angedrückt. Durch diese Maßnahme wird erreicht, dass die Schutzhaube sich auch über Unebenheiten gut bewegen kann und den Laserstrahl dennoch zuverlässig umschließt.

Gemäß einer vorteilhaften Weiterbildung ist eine Absaugeinrichtung zum Absaugen von bei der Beschriftung freigesetzten Partikeln und/oder Aerosolen vorgesehen. Dadurch werden Schadstoffe bzw. Verschmutzungen gleich beim Entstehen entfernt. Die Absaugeinrichtung weist zweckmäßig eine in die Schutzhaube mündende Absaugleitung auf.

Vorteilhaft ist der Beschriftungskopf lösbar an der Bewegungseinheit befestigt, und/oder die Lichtleitfaser ist lösbar im Beschriftungskopf aufgenommen. Der Beschriftungskopf bzw. die Lichtleitfaser kann dann ausgetauscht und durch einen anderen Beschriftungskopf oder Resonator bzw. eine andere Lichtleitfaser ersetzt werden, beispielsweise wenn Wartungs- oder Reparaturarbeiten am Resonator erforderlich sind. Zweckmäßig weist die Vorrichtung einen Sicherungsmechanismus auf, der die Laserlichtquelle abschaltet, so bald der Beschriftungskopf von der Bewegungseinheit abgenommen wird bzw. so bald die Lichtleitfaser aus dem Beschriftungskopf entfernt wird.

Im Folgenden wird die Erfindung anhand eines in der Zeichnung dargestellten Ausführungsbeispiels näher erläutert. Es zeigen
- Fig. 1: eine schematische Seitenansicht einer Vorrichtung zur Beschriftung von Kennzeichnungsschildern gemäß einem ersten Ausführungsbeispiel;
- Fig. 2: eine Detailansicht des Beschriftungskopfs und der Bewegungseinheit aus Fig. 1;
- Fig. 3: eine schematische Seitenansicht einer Vorrichtung zur Beschriftung von Kennzeichnungsschildern gemäß einem zweiten Ausführungsbeispiel und
- Fig. 4: eine Detailansicht des Beschriftungskopfs und der Bewegungseinheit aus Fig. 3.

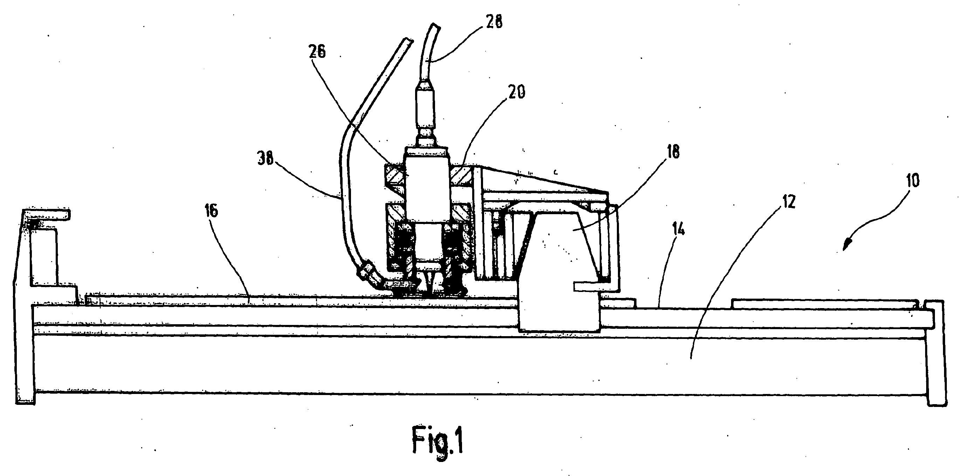

Eine Beschriftungsvorrichtung 10 (Fig. 1) gemäß einem ersten Ausführungsbeispiel, das nicht unter den Schutzbereich der Patentansprüche fällt, weist ein Grundgestell 12 mit einer Auflageebene 14 auf, auf die Kennzeichnungsschilder zur Beschriftung aufgelegt werden können. In Fig. 1 ist ein mehrere zusammenhängende Kennzeichnungsschilder aufweisender Kennzeichnungsschildersatz 16 auf die Auflageebene 14 aufgelegt. Desweiteren weist die Vorrichtung 10 eine Bewegungseinheit 18 auf, an der ein Beschriftungskopf 20 lösbar befestigt ist. Die Bewegungseinheit 18 weist einen die Auflageebene 14 überspannenden Bewegungsarm 22 auf, der senkrecht zu seiner Längsrichtung beweglich am Grundgestell 12 angebracht ist. Entlang der Längsrichtung des Bewegungsarms 22 ist ein Laufwagen 24 beweglich angebracht, an dem der Beschriftungskopf 20 befestigt ist. Dadurch ist der Beschriftungskopf 20 zweidimensional über der Auflageebene 14 beweglich.

Der Beschriftungskopf 20 weist als Bestandteil den Resonator 26 eines Lasers auf. Der Resonator 26 ist über einen Lichtleiter 28 mit einer in der Zeichnung nicht dargestellten Pumplichtquelle verbunden, die vom Resonator 26 räumlich getrennt ortsfest angeordnet ist. Ein aus dem Resonator 26 austretender Laserstrahl 30 ist senkrecht nach unten auf die Kennzeichnungsschilder 16 gerichtet und dient dazu, diese mit einer Beschriftung zu versehen. Aufgrund der geringen Entfernung zwischen dem Resonator 26 und den Kennzeichnungsschildern 16 kann der Laserstrahl 30 mittels einer geeigneten Optik mit einer hohen Energiedichte auf die Kennzeichnungsschilder 16 fokussiert werden, so dass in der Beschriftungsvorrichtung 10 ein preisgünstiger Laser mit niedriger Leistung Verwendung finden kann. Der Resonator 26 ist so im Beschriftungskopf 20 befestigt, dass er zum Austausch leicht aus diesem entnommen werden kann.

Der Beschriftungskopf 20 weist eine Schutzhaube 32 auf, deren Seitenwände sich von oberhalb der Lichtaustrittsöffnung des Resonators 26 bis zu den Kennzeichnungsschildern 16 erstrecken und den Laserstrahl 30 ringsum einschließen. Die Schutzhaube 32 weist einen auf den Kennzeichnungsschildern 16 aufliegenden Schlitten 34 auf, so dass sie auch über Unebenheiten auf den Kennzeichnungsschildern 16 aufliegend über diese bewegbar ist. Sie ist in vertikaler Richtung beweglich beführt und wird von Rückstellfedern 36 gegen die Kennzeichnungsschilder 16 gedrückt. Zur Entfernung von bei der Beschriftung entstehenden Abriebpartikeln oder Aerosolen ist eine Absaugleitung 38 durch die Schutzhaube 32 hindurchgeführt, die an eine in der Zeichnung nicht dargestellte Absaugeinrichtung angeschlossen ist.

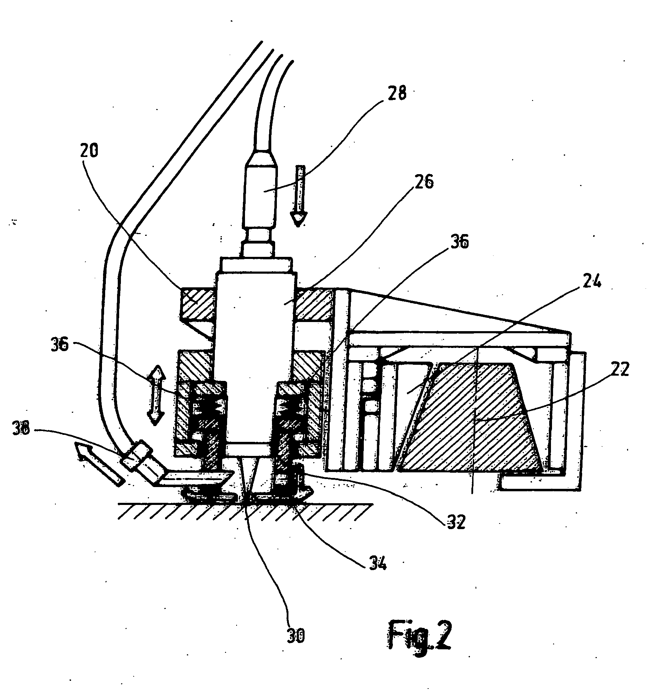

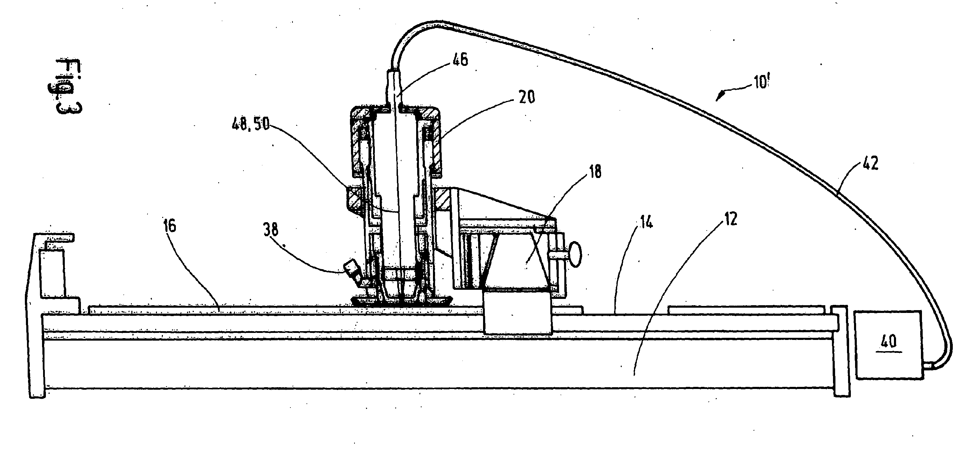

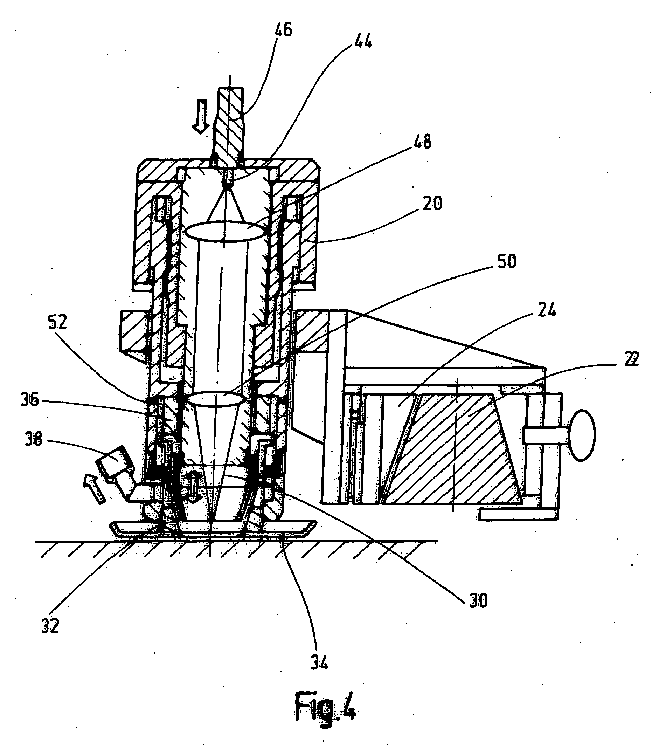

Die Beschriftungsvorrichtung 10' gemäß dem zweiten Ausführungsbeispiel (Fig. 3, 4) entspricht in ihrem Aufbau weitgehend der Beschriftungsvorrichtung 10 gemäß dem ersten Ausführungsbeispiel. Einander entsprechende Bauteile sind daher mit den selben Bezugszeichen versehen. Auch bei der in Fig. 3, 4 gezeigten Beschriftungsvorrichtung 10' kann mittels einer einen Bewegungsarm 22 und einen Laufwagen 24 aufweisenden Bewegungseinheit 18 ein Beschriftungskopf 20 zweidimensional über einer Auflageebene 14 bewegt werden, auf die Kennzeichnungsschilder 16 zur Beschriftung aufgelegt werden können. Der Hauptunterschied zur in Fig. 1, 2 gezeigten Beschriftungsvorrichtung 10 besteht darin, dass das Laserbeschriftungsgerät einen Faserlaser 40 aufweist, der ortsfest angeordnet ist. An die laseraktive Faser des Faserlasers 40 ist in Lichtaustrittsrichtung hinter einem Auskoppelspiegel eine Lichtleitfaser 42 mit ihrem ersten Ende angespleißt. Das zweite Ende 44 der Lichtleitfaser 42 wird durch einen Stecker 46 gehalten, der in den Beschriftungskopf 20 eingeschraubt ist. Das vom Faserlaser 40 in die Lichtleitfaser 42 eingekoppelte Laserlicht tritt am zweiten Ende 44 aus der Lichtleitfaser 42 aus und wird mittels einer Fokussiereinheit (Kollimationslinse 48, Fokussierlinse 50) auf die zu beschriftende Oberfläche fokussiert. Auf der gesamten Wegstrecke vom zweiten Ende 44 bis zum Auftreffpunkt auf der zu beschriftenden Oberfläche ist das Laserlicht durch den Beschriftungskopf 20 eingeschlossen. Hierzu weist der Beschriftungskopf 20 wiederum eine Schutzhaube 32 auf, die mit einem auf den Kennzeichnungsschildern 16 aufliegenden Schlitten 34 versehen ist. Auch beim zweiten Ausführungsbeispiel ist durch die Schutzhaube 32 eine Absaugleitung 38 zum Absaugen von Abriebpartikeln oder Aerosolen durchgeführt. Die Schutzhaube 32 weist zudem Einleitungsöffnungen 52 für Zuluft auf. Auch beim zweiten Ausführungsbeispiel ist die Schutzhaube 32 gegen eine Federkraft höhenverstellbar gelagert. Zudem ist die Fokussiereinheit 48, 50 ebenfalls höhenverstellbar im Beschriftungskopf 20 angeordnet, wobei an der Außenseite des Beschriftungskopfs 20 eine Skala für die Justierung der Höhe der Fokussiereinheit 48, 50 angebracht ist.

## Patentansprüche

1. Vorrichtung zur Beschriftung von Kennzeichnungsschildern (16) mit einem Laserbeschriftungsgerät, mit einer Auflageebene (14) für die Kennzeichnungsschilder (16), mit einem Beschriftungskopf (20) zum Aufbringen der Beschriftung auf die Kennzeichnungsschilder (16) und mit einer Bewegungseinheit (18) zum Bewegen des Beschriftungskopfs (20) über der Auflageebene (14), **dadurch gekennzeichnet, dass** das Laserbeschriftungsgerät einen Faserlaser (40) mit einem Resonator sowie eine Lichtleitfaser (42) aufweist, wobei die Lichtleitfaser (42) mit ihrem ersten Ende zur Einleitung des aus dem Faserlaser ausgekoppelten Laserlichts an den Resonator des Faserlasers (40) angeschlossen ist und mit ihrem zweiten Ende (44) am Beschriftungskopf (20) angebracht ist und dass der Beschriftungskopf (20) eine den aus aus der Lichtleitfaser (42) austretenden Laserstrahl (30) rings umschließende Schutzhaube (32) aufweist, so dass von den Kennzeichnungsschildern (16) oder der Auflageebene (14) reflektiertes Laserlicht nicht in die Umgebung gelangt.

2. Vorrichtung nach Anspruch 1, **dadurch gekennzeichnet, dass** die Lichtleitfaser (42) mit ihrem ersten Ende an den Resonator angespleißt ist.

3. Vorrichtung nach Anspruch 1 oder 2, **dadurch gekennzeichnet, dass** der Beschriftungskopf (20) mindestens eine Kollimationslinse (48) und mindestens eine Fokussierlinse (50) zur Fokussierung des aus dem zweiten Ende (44) der Lichtleitfaser (42) bzw. dem Resonator (26) austretenden Laserlichts auf die Kennzeichnungsschilder (16) aufweist.

4. Vorrichtung nach einem der vorangehenden Ansprüche, **dadurch gekennzeichnet, dass** die Schutzhaube (32) einen Schlitten (34) zum Aufsetzen auf die zu beschriftenden Kennzeichnungsschilder (16) aufweist.

5. Vorrichtung nach Anspruch 4, **dadurch gekennzeichnet, dass** die Schutzhaube (32) den Laserstrahl (30) rings umschließende Seitenwände aufweist, die sich von der Höhe der Austrittsstelle des Laserlichts bis hinab zum Schlitten (34) erstrecken.

6. Vorrichtung nach einem der vorangehenden Ansprüche, **dadurch gekennzeichnet, dass** die Schutzhaube (32) gegenüber der Bewegungseinheit (18) höhenverstellbar gelagert ist.

7. Vorrichtung nach Anspruch 6, **gekennzeichnet durch** ein Rückstellelement (36) zum Andrücken der Schutzhaube (32) auf die zu beschriftenden Kennzeichnungsschilder (16).

8. Vorrichtung nach einem der vorangehenden Ansprüche, **gekennzeichnet durch** eine Absaugeinrichtung zum Absaugen von bei der Beschriftung freigesetzten Partikeln und/oder Aerosolen.

9. Vorrichtung nach Anspruch 8, **dadurch gekennzeichnet, dass** die Absaugeinrichtung eine in die Schutzhaube (32) mündende Absaugleitung (38) aufweist.

10. Vorrichtung nach einem der vorangehenden Ansprüche, **dadurch gekennzeichnet, dass** der Beschriftungskopf (20) lösbar an der Bewegungseinheit (18) befestigt ist und/oder dass die Lichtleitfaser lösbar im Beschriftungskopf (20) aufgenommen ist.

11. Vorrichtung nach Anspruch 10, **gekennzeichnet durch** einen Sicherungsmechanismus zum Abschalten des Laserbeschriftungsgeräts, der beim Abnehmen des Beschriftungskopfs (20) von der Bewegungseinheit (18) und/oder beim Entfernen der Lichtleitfaser (42) aus dem Beschriftungskopf (20) ausgelöst wird.

## Claims

1. Device for inscribing identification plates (16) with a laser inscription device, having a support plane (14) for the identification plates (16), having an inscription head (20) for applying the inscription to the identification plates (16) and having a movement unit (18) for moving the inscription head (20) over the support plane (14), **characterised in that** the laser inscription device has a fibre laser (40) having a resonator and an optical fibre (42), the optical fibre (42) being connected to the resonator of the fibre laser (40) with its first end to introduce the laser light decoupled from the fibre laser and being fitted with its second end (44) to the inscription head (20), and **in that** the inscription head (20) has a protective cover (32) which annularly surrounds the laser beam (30) being discharged from the optical fibre (42), so that laser light reflected by the identification plates (16) or the support plane (14) does not reach the environment.

2. Device according to claim 1, **characterised in that** the optical fibre (42) is spliced to the resonator with its first end.

3. Device according to claim 1 or claim 2, **characterised in that** the inscription head (20) has at least one collimation lens (48) and at least one focusing lens (50) for focusing the laser light which is being discharged from the second end (44) of the optical fibre (42) or the resonator (26) onto the identification plates (16).

4. Device according to any one of the preceding claims, **characterised in that** the protective cover (32) has a carriage (34) for positioning on the identification plates (16) to be inscribed.

5. Device according to claim 4, **characterised in that** the protective cover (32) has lateral walls which annularly surround the laser beam (30) and which extend downwards from the height of the discharge location of the laser light as far as the carriage (34).

6. Device according to any one of the preceding claims, **characterised in that** the protective cover (32) is supported so as to be height-adjustable with respect to the movement unit (18).

7. Device according to claim 6, **characterised by** a restoring element (36) for pressing the protective cover (32) onto the identification plates (16) to be inscribed.

8. Device according to any one of the preceding claims, **characterised by** a suction device for drawing off particles and/or aerosols which are released during the inscription.

9. Device according to claim 8, **characterised in that** the suction device has a suction line (38) which opens into the protective cover (32).

10. Device according to any one of the preceding claims, **characterised in that** the inscription head (20) is releasably secured to the movement unit (18) and/or **in that** the optical fibre is releasably received in the inscription head (20).

11. Device according to claim 10, **characterised by** a securing mechanism for switching off the laser inscription device, which mechanism is initiated when the inscription head (20) is removed from the movement unit (18) and/or when the optical fibre (42) is removed from the inscription head (20).

## Revendications

1. Dispositif destiné à porter des inscriptions sur des plaques d'identification (16) à l'aide d'un appareil d'inscription au laser, avec un plan de support (14) pour les plaques d'identification (16), avec une tête d'écriture (20) permettant de porter les inscriptions sur les plaques d'identification (16), et avec une unité de déplacement (18) destinée à déplacer la tête d'écriture (20) au-dessus du plan de support (14), **caractérisé en ce que** l'appareil d'inscription au laser présente un laser à fibre (40) pourvu d'un résonateur ainsi qu'une fibre optique (42), sachant que la fibre optique (42) est raccordée par sa première extrémité au résonateur du laser à fibre (40) afin d'introduire la lumière laser extraite du laser à fibre et est montée par sa deuxième extrémité (44) sur la tête d'écriture (20), et **en ce que** la tête d'écriture (20) présente un capot de protection (32) entourant annulairement le faisceau laser (30) sortant de la fibre optique (42), de sorte que la lumière laser réfléchie par les plaques d'identification (16) ou par le plan de support (14) ne parvient pas dans l'environnement.

2. Dispositif selon la revendication 1, **caractérisé en ce que** la fibre optique (42) est épissée par sa première extrémité sur le résonateur.

3. Dispositif selon la revendication 1 ou 2, **caractérisé en ce que** la tête d'écriture (20) présente au moins une lentille de collimation (48) et au moins une lentille de focalisation (50) pour focaliser sur les plaques d'identification (16) la lumière laser sortant de la deuxième extrémité (44) de la fibre optique (42) ou du résonateur (26).

4. Dispositif selon l'une des revendications précédentes, **caractérisé en ce que** le capot de protection (32) présente un chariot (34) pour le poser sur les plaques d'identification (16) devant recevoir des inscriptions.

5. Dispositif selon la revendication 4, **caractérisé en ce que** le capot de protection (32) présente des parois latérales entourant latéralement le faisceau laser (30), qui s'étendent vers le bas depuis la hauteur du point de sortie de la lumière laser jusqu'au chariot (34).

6. Dispositif selon l'une des revendications précédentes, **caractérisé en ce que** le capot de protection (32) est monté avec possibilité de réglage en hauteur par rapport à l'unité de déplacement (18).

7. Dispositif selon la revendication 6, **caractérisé par** un élément de rappel (36) pour presser le capot de protection (32) sur les plaques d'identification (16) devant recevoir des inscriptions.

8. Dispositif selon l'une des revendications précédentes, **caractérisé par** un équipement d'aspiration pour aspirer les particules et/ou aérosols dégagés lors de l'opération d'inscription.

9. Dispositif selon la revendication 8, **caractérisé en ce que** l'équipement d'aspiration présente une conduite d'aspiration (38) débouchant dans le capot de protection (32).

10. Dispositif selon l'une des revendications précédentes, **caractérisé en ce que** la tête d'écriture (20) est fixée de manière amovible sur l'unité de déplacement (18), et/ou **en ce que** la fibre optique est reçue de manière amovible dans la tête d'écriture (20).

11. Dispositif selon la revendication 10, **caractérisé par** un mécanisme de sécurité pour désactiver l'appareil d'inscription au laser, mécanisme qui est déclenché lorsque la tête d'écriture (20) est enlevée de l'unité de déplacement (18), et/ou lorsque la fibre optique (42) est retirée de la tête d'écriture (20).
